# EUROPÄISCHE PATENTSCHRIFT

(11) **EP 3 420 150 B1**
(45) Veröffentlichungstag und Bekanntmachung des Hinweises auf die Patenterteilung: **08.01.2020**
(21) Anmeldenummer: 17705877.3
(22) Anmeldetag: 17.02.2017
(51) Int. Cl.: B01D 29/35, B01D 29/44, B01D 29/64, E03F 5/14

(54) **SIEBVORRICHTUNG**
SCREENING DEVICE
DISPOSITIF DE TAMISAGE

(30) Priorität: 23.02.2016 DE 102016103081
(43) Veröffentlichungstag der Anmeldung: 02.01.2019
(73) Patentinhaber: Huber SE, 92334 Berching (DE)
(72) Erfinder: ABT, Simon, 91177 Thalmaessing (DE)
(74) Vertreter: Baudler, Ron
(86) Internationale Anmeldenummer: PCT/EP2017/053609
(87) Internationale Veröffentlichungsnummer: WO 2017/144361

(56) Entgegenhaltungen:
- WO-A1-00/48705
- WO-A1-03/059487
- CH-A5- 677 001
- DE-A1-102011 082 629

## Beschreibung

Die vorliegende Erfindung betrifft eine Siebvorrichtung zum Abscheiden und Entfernen von Verunreinigungen aus Abwasser mit zwei endlosen und zueinander beabstandet gelagerten Antriebsmitteln, wobei die Antriebsmittel jeweils mit wenigstens einem Antriebsrad auf einer Umlaufbahn geführt sind, mit einem ortsfest angeordneten Siebrost, der mehrere zueinander benachbart angeordnete Roststäbe zum Abscheiden von Verunreinigungen aus dem Abwasser aufweist, und mit mehreren mit den Antriebsmitteln in Verbindung stehenden Räumelementen zum Entfernen der von dem Siebrost abgeschiedenen Verunreinigungen vom Siebrost.

Derartige Siebvorrichtungen sind aus dem Stand der Technik hinlänglich bekannt und dienen beispielsweise der Entfernung von grobem Siebgut (Holz, Steine, etc.) aus einem in einem Abwasserkanal fließendem Abwasser. Ein guter Abscheidegrad und somit die Effizienz der Siebvorrichtung sind hier insbesondere von den Strömungsverhältnissen des Abwasserkanals und der Geometrie der Siebvorrichtung abhängig.

Die Siebroste bekannter Siebvorrichtungen erstrecken sich quer zur Fließrichtung des die Siebvorrichtung erreichenden Abwassers. Der Siebrost wird damit vom ankommenden Abwasser von vorne angeströmt, wobei das Abwasser den Siebrost ohne größere Umlenkungen passiert, seine Fließrichtung also im Wesentlichen beibehält. Entsprechende Siebvorrichtungen sind beispielsweise in der WO 03/059487 A1 und der CH 677 001 A5 gezeigt.

Um einen hohen Abscheidegrad zu erreichen, gibt es aus dem Stand der Technik bereits vielfältige Lösungen. Beispielsweise kann durch eine Verringerung des Abstands der Roststäbe des Siebrosts der Abscheidegrad erhöht werden. Nachteilig ist es jedoch, dass hierdurch zugleich die Durchsatzleistung und somit auch die Effizienz der Siebvorrichtung geringer werden.

Ferner weisen die bekannten Siebvorrichtungen den Nachteil auf, dass ihre Siebfläche durch den Querschnitt des Abwasserkanals begrenzt ist.

Aufgabe der vorliegenden Erfindung ist es daher, eine effiziente Siebvorrichtung zu schaffen, die sich in vorteilhafterweise vom Stand der Technik unterscheidet.

Die Aufgabe wird gelöst durch eine Siebvorrichtung mit den Merkmalen des unabhängigen Patentanspruchs 1.

Vorgeschlagen wird eine Siebvorrichtung zum Abscheiden und Entfernen von Verunreinigungen aus Abwasser. Die Siebvorrichtung umfasst zumindest zwei endlose und zueinander beabstandet gelagerte Antriebsmittel. Die Antriebsmittel sind jeweils mit wenigstens einem Antriebsrad auf einer Umlaufbahn geführt, wobei jedes Antriebsmittel vorrangig mit Hilfe mehrerer Antriebsräder in Verbindung steht. Die Siebvorrichtung weist ferner einen ortsfesten Siebrost mit mehreren zueinander benachbart angeordneten Roststäben zum Abscheiden von Verunreinigungen aus dem Abwasser auf, wobei der Siebrost eine von dem Abwasser im Betrieb der Siebvorrichtung angeströmte Siebfläche bildet. Des Weiteren sind mehrere Räumelemente zum Entfernen der von dem Siebrost abgeschiedenen Verunreinigungen vorhanden, die sich vorzugsweise zwischen den Antriebsmitteln erstrecken und die mit Hilfe der Antriebsmittel, mit denen sie in Verbindung stehen, auf einer Umlaufbahn und hierbei zumindest abschnittsweise entlang der durch den Siebrost gebildeten Siebfläche geführt werden.

Erfindungsgemäß ist nun vorgesehen, dass der Siebrost eine ortsfeste Siebfläche bildet, die sich in vorgesehener Einbaulage der Siebvorrichtung (d. h. in der Lage, die sie nach dem Einbau in einen Abwasserkanal einnimmt) im Wesentlichen in Fließrichtung des die Siebvorrichtung erreichenden Abwassers erstreckt. Die Fließrichtung ist dabei die Richtung, die das Abwasser unmittelbar vor Erreichen der Siebvorrichtung bzw. kurz vor dem Eintritt in die Siebvorrichtung aufweist. Die Breite des Abwasserkanals verläuft dabei quer zur Fließrichtung des Abwassers.

Der Kern der Erfindung liegt also darin, dass die von dem Siebrost gebildete Siebfläche nicht, wie im Stand der Technik üblich, in einem 90°-Winkel zur genannten Fließrichtung verläuft. Vielmehr verläuft die Siebfläche in eingebautem Zustand der Siebvorrichtung im Wesentlichen in Fließrichtung des in die Siebvorrichtung einströmenden Abwassers, so dass dieses seitlich umgelenkt wird, wenn es durch die Öffnungen des Siebrosts fließt (hierfür weist die Siebvorrichtung, wie später noch ausführlicher erläutert, vorzugweise eine Strömungsumlenkung, beispielsweise in Form einer Stauwand, auf). Die Siebfläche verläuft vorzugsweise parallel zur Fließrichtung, d.h. ihre horizontal verlaufende Breite erstreckt sich exakt in der genannten Fließrichtung. Alternativ sind auch Abweichungen von bis zu 20° denkbar, da sich die Siebfläche auch in diesem Fall im Wesentlichen in der genannten Fließrichtung erstreckt.

Die Antriebsräder sind mit Hilfe eines Antriebs der Siebvorrichtung (z.B. eines Elektromotors) antreibbar, so dass sich die beiden mit Hilfe der Antriebsräder gelagerten Antriebsmittel beim Betrieb der Siebvorrichtung entlang der Umlaufbahn bewegen. Zu diesem Zweck umfasst die Siebvorrichtung vorzugsweise zumindest zwei Antriebsräder, die um eine gemeinsame Drehachse drehbar sind, wobei jedes Antriebsrad des Antriebsradpaars mit einem eigenen Antriebsmittel in Verbindung steht (unter der Drehachse im Sinne der vorliegenden Erfindung ist die Achse zu verstehen, um die sich das jeweilige Antriebsrad beim Betrieb des genannten Antriebs dreht). Vorzugsweise umfasst die Siebvorrichtung mehrere Antriebsradpaare, wobei die Drehachsen der einzelnen Antriebsradpaare vorzugsweise parallel zueinander verlaufen.

Die Antriebsmittel stehen dabei derart mit den Räumelementen in Verbindung, dass diese infolge eines Antriebs der Antriebsräder gemeinsam mit den Antriebsmitteln entlang der Umlaufbahn bewegt werden. Der ortsfeste Siebrost ist derart, insbesondere zwischen den Antriebsmitteln, angeordnet, dass die Räumelemente an diesem vorbeistreichen und die Verunreinigungen entfernen können.

Durch die beschriebene Anordnung ist es möglich, die in der genannten Fließrichtung verlaufende Breite des Siebrosts bzw. dessen Siebfläche bei entsprechender Anpassung der Länge der Räumelemente nahezu beliebig zu wählen, da diese Maße in Fließrichtung des die Siebvorrichtung erreichenden Abwassers und damit in Längsrichtung des Abwasserkanals verlaufen. Hingegen ist die Breite der Siebfläche bei bekannten Siebvorrichtungen durch die Breite des Abwasserkanals beschränkt. Die Breite des Abwasserkanals, welche im Stand der Technik somit maßgeblich für die Geometrie der gesamten Siebvorrichtung ist, wirkt damit bei der vorliegenden Erfindung im Hinblick auf die Breite der Siebfläche nicht mehr als beschränkende Größe.

Ein hoher Abscheidegrad sowie eine gute Durchsatzleistung kann nun beispielsweise dadurch erreicht werden, dass der Abstand der Roststäbe zueinander in Fließrichtung des Abwassers reduziert und zugleich die Anzahl der Roststäbe erhöht werden. Die Länge der Räumelemente, welche sich im Wesentlichen parallel zur Drehachse der Antriebsräder erstreckt, kann sodann an die Breite des Siebrosts angepasst werden.

Insbesondere sollten nun auch ein Teil oder vorzugsweise alle Drehachsen der die Antriebsmittel führenden Antriebsräder in Einbaulage der Siebvorrichtung im Wesentlichen in Fließrichtung des die Siebvorrichtung erreichenden bzw. in die Siebvorrichtung einströmenden Abwassers ausgerichtet sein. Vorzugweise verlaufen die Drehachsen zudem in horizontaler Richtung.

Die Umlaufbahn der jeweiligen Antriebsmittel liegt zudem vorzugsweise jeweils in einer Ebene, die im Wesentlichen quer zur genannten Fließrichtung und insbesondere vertikal ausgerichtet ist.

Einen Vorteil stellt es dar, wenn die Siebvorrichtung ein Gestell mit einer Zulauföffnung für das Abwasser umfasst. Die Zulauföffnung ist in vorgesehener Einbaulage der Siebvorrichtung und bezogen auf die Fließrichtung des die Siebvorrichtung erreichenden Abwassers vor dem Siebrost angeordnet. Das Gestell ist derart ausgebildet, dass das strömende Abwasser durch die Zulauföffnung hindurch und an den darin angeordneten Siebrost geführt wird. Das die Siebvorrichtung erreichende Abwasser ist durch das Gestell selbst am Weiterfließen gehindert. Durch die Zulauföffnung kann es jedoch in die Siebvorrichtung fließen und wird hierbei zielgerichtet zum Siebrost geleitet. Das Abwasser kann sodann durch die Roststäbe ablaufen, wobei die angeströmten, d. h. die vom Abwasser mitgeführten Verunreinigungen an der Siebfläche abgeschieden werden.

Im Übrigen sei an dieser Stelle darauf hingewiesen, dass der Siebrost nicht einteilig ausgebildet sein muss, sondern aus mehreren Abschnitten bestehen kann, die wiederum miteinander verbunden oder auch voneinander beabstandet sein können. Auch muss es sich bei der Siebfläche nicht um eine zusammenhängende Fläche handeln. Vielmehr kann sich auch die Siebfläche aus mehreren Abschnitten zusammensetzen, wobei einzelne Abschnitte auch voneinander getrennt sein können.

Die Siebvorrichtung weist auf ihrer der Zulauföffnung gegenüberliegenden Seite vorteilhafterweise eine Stauwand auf. Das durch die Zulauföffnung in die Siebvorrichtung einströmende Abwasser und mit ihm die Verunreinigungen können hierdurch derart umgeleitet werden, dass das Abwasser auf den Siebrost trifft und dessen nicht zurückgehaltener Bestandteil durch die Roststäbe nach außen dringt. Die Stauwand verläuft hierbei vorzugsweise senkrecht zur Fließrichtung des in die Siebvorrichtung einströmenden Abwassers und bewirkt somit eine Änderung der Fließrichtung des Abwassers. An den Roststäben können die Verunreinigungen vom Abwasser abgeschieden und durch die umlaufenden Räumelemente nach oben in Richtung einer Abwurfstelle gefördert werden. Die Effizienz der Siebvorrichtung kann durch eine derartige Ausbildung positiv beeinflusst werden, da das Abwasser zuverlässig an der Stauwand umgelenkt und zwangsweise durch den Siebrost geleitet wird.

Des Weiteren ist es von Vorteil, wenn die Stauwand in vorgesehener Einbaulage der Siebvorrichtung quer oder schräg zur Fließrichtung des die Siebvorrichtung erreichenden Abwassers verläuft. Die Siebvorrichtung erstreckt sich dabei vorzugsweise über die gesamte Breite des Abwasserkanals, wobei die Stauwand nur einen Teil der Breite des Abwasserkanals überbrückt, so dass das Abwasser nach Passieren des Siebrosts zwischen der Stauwand und der Kanalwand des Abwasserkanals hindurchströmen kann. Das ankommende Abwasser strömt also durch die Zulauföffnung in die Siebvorrichtung. Dort wird es durch die Stauwand umgelenkt und fließt schließlich durch den Siebrost, um letztlich die Siebvorrichtung wieder zu verlassen, wobei Verunreinigungen ab einer bestimmten Größe vom Siebrost zurückgehalten werden.

Insbesondere ist es also von Vorteil, wenn die Stauwand in vorgesehener Einbaulage der Siebvorrichtung in Fließrichtung nach der Zulauföffnung angeordnet ist. Das verunreinigte Abwasser kann durch die Zulauföffnung in die Siebvorrichtung einströmen und von der Stauwand umgelenkt werden. Eine derartige Anordnung der Stauwand in Bezug auf die Zulauföffnung ermöglicht es, dass das Abwasser gezielt innerhalb der Siebvorrichtung geführt wird.

Der Siebrost erstreckt sich vorteilhafterweise in vorgesehener Einbaulage der Siebvorrichtung und bezogen auf die Fließrichtung des die Siebvorrichtung erreichenden Abwassers zwischen der Zulauföffnung des Gestells und der Stauwand. Der Siebrost bildet dabei eine Ablauföffnung des Gestells. Durch die Zulauföffnung einströmendes und durch die Stauwand umgelenktes Abwasser kann somit ausschließlich durch den Siebrost, d. h. durch die durch die Roststäbe begrenzten Öffnungen, aus dem Gestell bzw. der Siebvorrichtung austreten. Durch die Anordnung des Siebrosts in Fließrichtung des Abwassers kann dessen Breite individuell an die erforderliche Durchflussleistung bzw. den Abscheidegrad angepasst werden. Hierfür können beispielsweise der Abstand und/oder die Anzahl der Roststäbe und somit die Breite des Siebrost geändert werden, da dieses Maß vom Querschnitt des Abwasserkanals selbst unabhängig ist. Vorzugsweise beträgt der Abstand zwischen Zulauföffnung und Stauwand der 1- bis 1,5-fachen Breite des Siebrosts. Insbesondere sollte sowohl die Zulauföffnung als auch die Stauwand direkt an den Siebrost anschließen.

Einen weiteren Vorteil stellt es dar, wenn der Siebrost mit Blick auf die Zulauföffnung, d. h. in Fließrichtung des in die Siebvorrichtung einströmenden Abwassers, im Wesentlichen eine U- bzw. V-Form aufweist. Der Siebrost erstreckt sich zumindest teilweise entlang der Umlaufbahn der Antriebsmittel. Die auf dieser Umlaufbahn geführten Räumelemente können hierdurch entlang des Siebrosts geführt werden und die Verunreinigungen entfernen. Des Weiteren kann die effektiv nutzbare Fläche des Siebrosts auf konstruktiv einfache Weise relativ groß gestaltet werden. Die Schenkel der U- bzw. V-Form können im Übrigen gleich lang sein. Auch ist es denkbar, dass die genannten Schenkel parallel verlaufen. Bevorzugt nimmt der horizontale Abstand zwischen den Schenkeln jedoch in vertikaler Richtung nach oben hin zu.

Zudem ist es von Vorteil, wenn der Siebrost eine Siebwanne sowie zwei sich beidseitig an die Siebwanne anschließende Siebrostabschnitte umfasst, wobei die Siebfläche der Siebvorrichtung durch die Siebwanne und die genannten Siebrostabschnitte gebildet wird. Der Siebrost ist vorzugsweise symmetrisch ausgebildet. Der Siebrost kann dabei einteilig oder auch mehrteilig sein, so dass er im Wartungsfall schnell und kostengünstig repariert werden kann. Ebenso kann die Rostfläche hierdurch vergrößert werden, so dass die abscheidbare Menge an Verunreinigungen deutlich erhöht werden kann. Vorzugsweise besteht der Siebrost aus drei miteinander zu einer Einheit verbundenen Hauptbestandteilen, nämlich der Siebwanne und den mit dieser verbundenen Siebrostabschnitten.

Die beiden Siebrostabschnitte erstrecken sich vorteilhafterweise zumindest abschnittsweise geradlinig von der Siebwanne ausgehend nach oben.

Von Vorteil ist es zudem, wenn sich der erste Siebrostabschnitt von dem Austrag ausgehend oder von einem unterhalb des Austrags angeordneten oberen Endabschnitt des Siebrosts nach unten hin bis zur Siebwanne erstreckt. Zwischen dem oberen Endabschnitt des Siebrosts und dem Austrag ist vorzugsweise ein Schurrenblech angeordnet, welches vorzugsweise durch wenigstens ein Blech ausgebildet ist. Die Verunreinigungen werden von den Roststäben in Richtung des oberen Endabschnittes transportiert, wobei das Abwasser zwischen den Roststäben entweichen kann. Anschließend gelangen die Verunreinigungen in den Bereich des Schurrenblechs und werden über den Austrag aus der Siebvorrichtung entfernt. Dabei ist die Siebwanne vorteilhafterweise im Bereich einer Kanalsohle des Abwasserkanals angeordnet. Zudem ist es von Vorteil, wenn sich der zweite Siebrostabschnitt von der Siebwanne ausgehend nach oben erstreckt. Auf diese Weise kann auch bei einem hohen Abwasserpegel garantiert werden, dass die Verunreinigungen zuverlässig aus dem Abwasser entfernt werden.

Vorteilhafterweise sind die Antriebsmittel Antriebsketten, Antriebsriemen oder Antriebsseile. Die Ausbildung der Antriebsmittel kann individuell an die erforderlichen Eigenschaften der Siebvorrichtung angepasst werden. Die Antriebsräder sind entsprechend der Wahl des Antriebsmittels anzupassen.

Einen weiteren Vorteil stellt es dar, wenn die Antriebsmittel jeweils mit Hilfe wenigstens eines oberen Antriebrads auf der Umlaufbahn geführt sind. Die Antriebsmittel werden während des Betriebs der Siebvorrichtung mit Hilfe eines Antriebs (z. B. eines Elektromotors) auf ihrer Umlaufbahn bewegt. Der Antrieb ist dabei vorzugsweise im Bereich der oberen Antriebsräder angeordnet, so dass seine empfindlichen Bauteile vor Nässe geschützt sind. Insbesondere befinden sich die oberen Antriebsräder im Bereich eines oberen Wendepunkts der Antriebsmittel, in dem sie eine Richtungsumkehr erfahren. Die Siebvorrichtung kann dabei alternativ oder ergänzend ein weiteres, unterhalb der oberen Antriebsräder angeordnetes Antriebsradpaar aufweisen, welches über die Antriebsmittel mittelbar oder unmittelbar durch den Antrieb antreibbar ist. Vorzugsweise ist das zuletzt genannte Antriebsradpaar in vertikaler Richtung im Bereich zwischen der Siebwanne und den oberen Antriebsrädern, besonders bevorzugt zwischen dem Siebrost und den oberen Antriebsrädern, angeordnet. Hierdurch sind die genannten Antriebsräder der Siebvorrichtung außerhalb des Abwassers gelagert und somit vor Nässe geschützt.

Alternativ oder zusätzlich kann auch im Bereich der Siebwanne, vorzugsweise unterhalb derselben, ein Antriebsradpaar angeordnet sein. Die Führung der Antriebsmittel im Bereich der Siebwanne kann aber auch durch eine Antriebsführung erfolgen, die im Bereich einer Kanalsohle des Abwasserkanals angeordnet sein kann. Die Antriebsführung wird beispielsweise durch Kunststoffelemente gebildet, die den Antriebsmitteln zugeordnet sind und mit diesen in Kontakt stehen. Weiterhin kann die Antriebsführung eine Kufe oder Schiene sein bzw. umfassen.

Vorteilhafterweise sind die Antriebsmittel in vorgesehener Einbaulage der Siebvorrichtung in Fließrichtung des die Siebvorrichtung erreichenden Abwassers hintereinander angeordnet. Die mit den Antriebsmittel in Verbindung stehenden sowie im Wesentlichen zwischen diesen angeordneten Räumelemente verlaufen hierdurch im Wesentlichen parallel zur Drehachse der Antriebsräder und somit in Fließrichtung des in die Siebvorrichtung einströmenden Abwassers.

Weitere Vorteile der Erfindung sind in den nachfolgenden Ausführungsbeispielen beschrieben. Es zeigt:
- **Figur 1**: eine Vorderansicht einer erfindungsgemäßen Siebvorrichtung,
- **Figur** 2: eine Vorderansicht einer erfindungsgemäßen Siebvorrichtung in einer Schnittansicht,
- **Figur 3**: einen schematischen Detailausschnitt einer Seitenansicht einer erfindungsgemäßen Siebvorrichtung im Bereich einer Antriebsführung, und
- **Figur 4**: einen perspektivischen Detailausschnitt einer erfindungsgemäßen Siebvorrichtung.

Zu Beginn sei erwähnt, dass in Figuren, die mehrere gleichartige Bauteile oder Abschnitte zeigen, teilweise nur eines oder zwei von mehreren gleichartigen Bauteilen (z. B. Räumelemente) bzw. Abschnitten mit einem Bezugszeichen versehen sind, um eine gute Übersichtlichkeit zu gewährleisten.

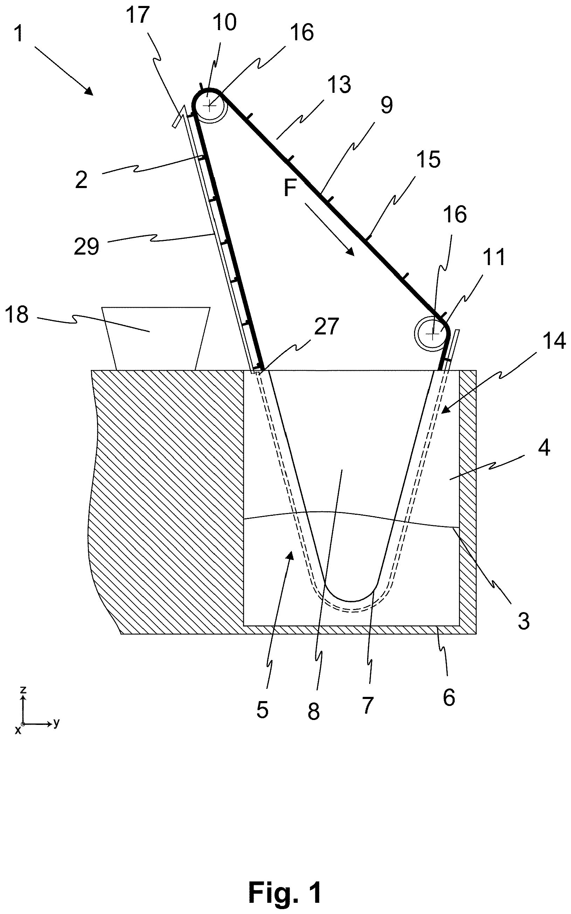

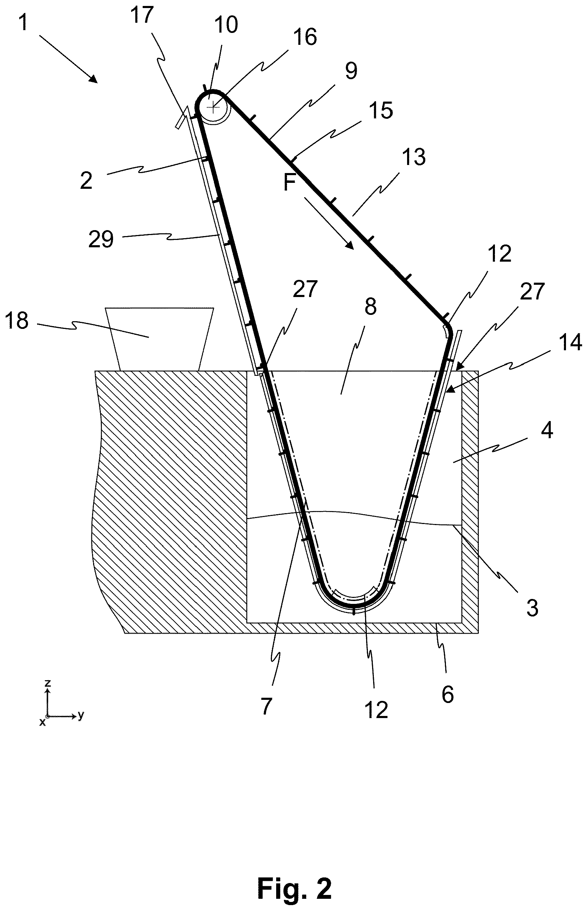

Die Figuren 1 und 2 zeigen jeweils eine Siebvorrichtung 1 zum Abscheiden und Abtransport von Verunreinigungen 2, insbesondere Siebgut, aus Abwasser 3. Die Siebvorrichtung 1 ist in einen Abwasserkanal 4 integriert und umfasst ein Gestell 5, über das sie im Abwasserkanal 4 verankert ist. Das Gestell 5 ist durch nicht gezeigte Befestigungselemente z. B. mit einer Kanalsohle 6 des Abwasserkanals 4 verbunden.

Durch eine Zulauföffnung 7 des Gestells 5 kann das Abwasser 3 in die Siebvorrichtung 1 hineinströmen. Der die Zulauföffnung 7 bildende Abschnitt der Siebvorrichtung 1 ist in Figur 2 nicht gezeigt, um die dahinter liegenden Abschnitte zeigen zu können (die vor der Blattebene liegende Zulauföffnung 7 ist durch eine gestrichelte Linie dargestellt). Im Wesentlichen handelt es sich jedoch bei dem Abschnitt um eine parallel zur Blattebene verlaufende Wandung des Gestells 5, die mit der Kanalsohle 6 und den seitlichen Wandungen des Abwasserkanals 4 dichtend abschließt, so dass Abwasser 3 nur über die Zulauföffnung7 in die Siebvorrichtung 1 einströmen kann (siehe Figur 1). Die Fließrichtung X verläuft hierbei in x-Richtung in die Blattebene hinein.

Auf seiner der Zulauföffnung 7 gegenüberliegenden Seite weist das Gestell 5 eine Stauwand 8 auf.

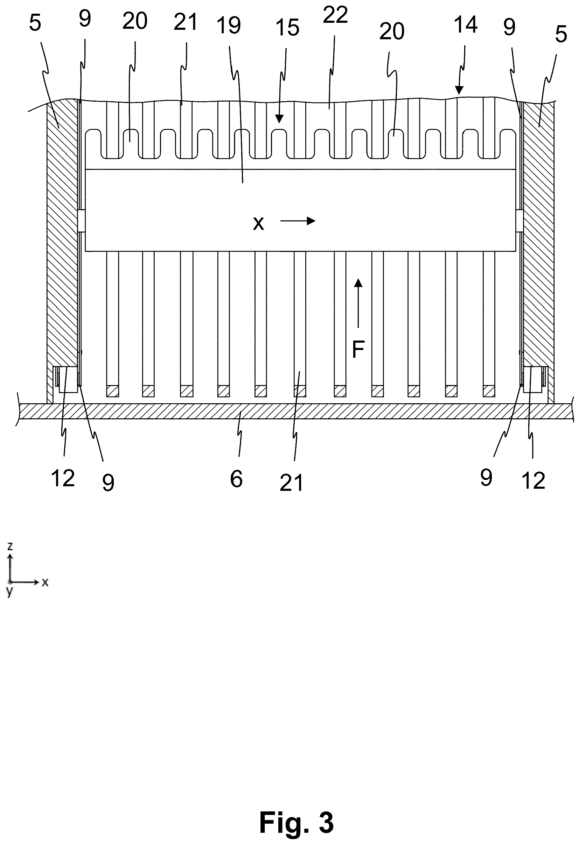

Zwischen der Zulauföffnung 7 und der Stauwand 8 sind zwei endlose und in x-Richtung hintereinander gelagerte Antriebsmittel 9 angeordnet. Die Antriebsmittel 9 sind jeweils wenigstens mit einem Antriebsrad 10 auf einer Umlaufbahn 13 geführt. Die Führung erfolgt hierbei insbesondere mit Hilfe eines oberen Antriebsrads 10, und vorzugsweise darüber hinaus mit Hilfe eines mittleren Antriebsrads 11 und/oder einer Antriebsführung 12 (vgl. Fig. 2 und Fig. 3) entlang einer Umlaufbahn 13. Die Antriebsmittel 9 sind dabei als Antriebskette, Antriebsriemen oder Antriebsseile ausgebildet. Entsprechend der Wahl der Antriebsmittel 9 werden sodann auch die Antriebsräder 10, 11 als Kettenrad, Riemenrad oder Seilrad ausgebildet. In der Fig. 2 ist die Siebvorrichtung 1 als Alternative zu Figur 1 mit zwei oberen Antriebsrädern 11 sowie zwei mittleren und zwei unteren Antriebsführungen 12 ausgebildet. Die Antriebsführung 12 ist dabei jeweils vorzugsweise eine Kufe oder eine Schiene.

Des Weiteren weist die gezeigte Siebvorrichtung 1 einen U- bzw. V-förmigen Siebrost 14 auf, welcher zumindest teilweise zwischen den beiden Antriebsmitteln 9 angeordnet ist. Zwischen den Antriebsmitteln 9 sind mehrere Räumelemente 15 angeordnet, mittels derer die vom Siebrost 14 zurückgehaltenen Verunreinigungen 2 von diesem entfernt werden können.

In der in den Figuren 1 und 2 dargestellten Einbaulage der Siebvorrichtung 1, d. h. bei in den Abwasserkanal 4 montierter Stellung, strömt das Abwasser 3 durch die Zulauföffnung 7 hindurch in x-Richtung in das Gestell 5, d. h. die Fließrichtung X des die Siebvorrichtung 1 erreichenden Abwassers 3 verläuft in x-Richtung. Da das Abwasser 3 nach dem Durchtritt durch die Zulauföffnung 7 aufgrund der Stauwand 8 nicht weiter in der ursprünglichen Fließrichtung X weiterströmen kann, passiert es zwangsläufig in y-Richtung den Siebrost 14 mit seiner sich in der genannten Fließrichtung X erstreckenden Siebfläche 26. Das Abwasser 3 fließt also durch den Siebrost 14 hindurch und schließlich aus der Siebvorrichtung 1 heraus und zurück in den Abwasserkanal 4, wobei Verunreinigungen 2 von dem Siebrost 14 zurückgehalten werden.

Die Antriebsräder 10, 11 können durch einen nicht dargestellten Antrieb mittelbar oder unmittelbar entlang einer Förderrichtung F bewegt werden, so dass sich die mit Hilfe der Antriebsräder 10, 11 gelagerten Antriebsmittel 9 entlang der Umlaufbahn 13 bewegen. Die Antriebsräder 10, 11 drehen sich vorzugsweise um eine Drehachse 16, welche sich in Fließrichtung X des die Siebvorrichtung 1 passierenden Abwassers 3, welche in Figur 1 durch die x-Richtung definiert ist, verläuft.

Die Räumelemente 15 stehen mit den Antriebsmitteln 9 derart in Wirkverbindung, dass diese ebenso auf der Umlaufbahn 13 bewegt werden. Die Räumelemente 15 streichen hierbei an dem Siebrost 14 vorbei und entfernen die Verunreinigungen 2 von diesem. Die Räumelemente 15 sind insbesondere ausgebildet, die Verunreinigungen 2 nach oben in Richtung eines Austrags 17 zu transportieren. Von dort werden die Verunreinigungen 2 beispielsweise in einen Container 18 gefördert. Zwischen dem Austrag 17 und einem oberen Endabschnitt 27 des Siebrosts ist zudem ein Schurrenblech 29 angeordnet. Das Schurrenblech 29 erstreckt sich als Verlängerung des Siebrosts 14 schräg nach oben und ist wasserundurchlässig ausgebildet, so dass das Abwasser 3 nur im Bereich das Abwasserkanals 4 austreten kann, nicht jedoch über dessen Breite hinaus.

Figur 3 zeigt einen schematischen Detailausschnitt einer Seitenansicht der erfindungsgemäßen Siebvorrichtung 1 im Bereich einer unteren Antriebsführung 12. Die Antriebsführung 12 ist in dem Gestell 5 über der Kanalsohle 6 angeordnet. Zwischen den beiden Antriebsmitteln 9 erstrecken sich dabei die Räumelemente 15. Die Räumelemente 15 sind mit den Antriebsmitteln 9 verbunden, so dass sich diese gemeinsam mit diesen in Förderrichtung F bewegen. Jedes Räumelement 15 umfasst vorzugsweise einen Räumbalken 19 mit nebeneinander angeordneten Reinigungszinken 20.

Die Räumelemente 15 erstrecken sich dabei in Fließrichtung X des Abwassers 3. Der Siebrost 14 weist mehrere Roststäbe 21 auf, welche derart mit den Reinigungszinken 20 korrespondieren, dass diese in die Öffnungen 22 zwischen den Roststäben 21 eingreifen, um die Verunreinigungen 2 (vgl. Fig. 1 und Fig. 2) zu entfernen.

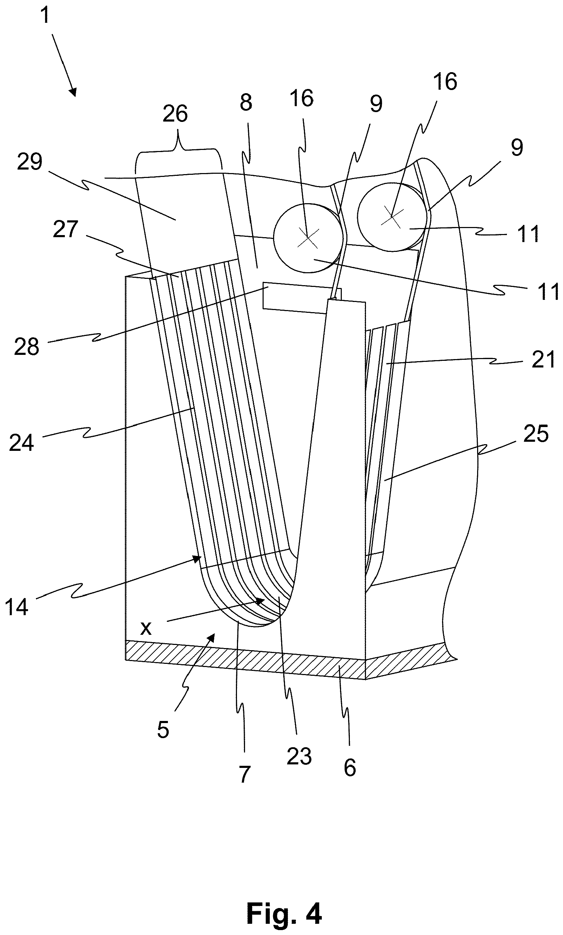

Figur 4 zeigt einen perspektivischen Detailausschnitt der Siebvorrichtung 1. Aus Gründen der Übersichtlichkeit sind hier die Räumelemente 15 nicht gezeigt. Auch die Antriebsmittel 9 sind nur im linken Bereich dargestellt. Der Siebrost 14 ist u- bzw. v-förmig ausgebildet und zwischen der Zulauföffnung 7 und der Stauwand 8 angeordnet. Die Stauwand 8 weist zudem einen Notüberlauf 28 auf, so dass das Abwasser 3 ab einem bestimmten Abwasserpegel oder bei einem Verstopfen der Siebvorrichtung aufgrund einer Fehlfunktion durch den Notüberlauf 28 aus der Siebvorrichtung 1 ausströmen kann. Der Siebrost 14 umfasst eine Siebwanne 23, einen ersten Siebrostabschnitt 24 sowie einen zweiten Siebrostabschnitt 25. Die beiden Siebrostabschnitte 24, 25 erstrecken sich beidseitig von der Siebwanne 23 ausgehend im Wesentlichen geradlinig nach oben.

Ebenso wie die beiden Siebrostabschnitte 24, 25 weist auch die Siebwanne 23 nebeneinander angeordnete Roststäbe 21 auf. Der erste Siebrostabschnitt 24 erstreckt sich von dem oberen Endabschnitt 27, (vgl. Fig. 1), ausgehend bis zur Siebwanne 23. Die Siebwanne 23 ist dabei im Bereich der Kanalsohle 6 angeordnet. Der zweite Siebrostabschnitt 24 erstreckt sich von der Siebwanne 23 ausgehend, insbesondere über das Abwasser 3 (vgl. Fig. 1) hinaus, nach oben. Wie hier deutlich zu sehen ist, verläuft jeder Abschnitt der durch die Siebwanne 23 und die restlichen Siebrostabschnitte 24, 25 gebildeten Siebfläche 26 parallel zur Fließrichtung X.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Siebvorrichtung
- 2: Verunreinigung
- 3: Abwasser
- 4: Abwasserkanal
- 5: Gestell
- 6: Kanalsohle
- 7: Zulauföffnung
- 8: Stauwand
- 9: Antriebsmittel
- 10: oberes Antriebsrad
- 11: mittleres Antriebsrad
- 12: Antriebsführung
- 13: Umlaufbahn
- 14: Siebrost
- 15: Räumelement
- 16: Drehachse
- 17: Austrag
- 18: Container
- 19: Räumbalken
- 20: Reinigungszinken
- 21: Roststab
- 22: Öffnung
- 23: Siebwanne
- 24: erster Siebrostabschnitt
- 25: zweiter Siebrostabschnitt
- 26: Siebfläche
- 27: oberer Endabschnitt
- 28: Notüberlauf
- 29: Schurrenblech

- F: Förderrichtung
- X: Fließrichtung

## Patentansprüche

1. Siebvorrichtung (1) zum Abscheiden und Entfernen von Verunreinigungen (2) aus Abwasser (3)
mit zwei endlosen und zueinander beabstandet gelagerten Antriebsmitteln (9), wobei die Antriebsmittel (9) jeweils mit wenigstens einem Antriebsrad (10, 11) auf einer Umlaufbahn (13) geführt sind,
mit einem ortsfest angeordneten Siebrost (14), der mehrere zueinander benachbart angeordnete Roststäbe (21) zum Abscheiden von Verunreinigungen (2) aus dem Abwasser (3) aufweist, und
mit mehreren mit den Antriebsmitteln (9) in Verbindung stehenden Räumelementen (15) zum Entfernen der von dem Siebrost (14) abgeschiedenen Verunreinigungen (2) vom Siebrost (14),
**dadurch gekennzeichnet,**
**dass** der Siebrost (14) eine ortsfeste Siebfläche (26) bildet, die sich in vorgesehener Einbaulage der Siebvorrichtung (1) im Wesentlichen in Fließrichtung (X) des in die Siebvorrichtung (1) einströmmenden Abwassers (3) erstreckt.

2. Siebvorrichtung nach dem vorherigen Anspruch, **dadurch gekennzeichnet, dass** die Antriebsräder (10, 11) um Drehachsen (16) drehbar gelagert sind, wobei sich zumindest ein Teil der Drehachsen (16) in vorgesehener Einbaulage der Siebvorrichtung (1) im Wesentlichen in Fließrichtung (X) des in die Siebvorrichtung (1) einströmmenden Abwassers (3) erstreckt.

3. Siebvorrichtung nach Anspruch 1 oder 2, **dadurch gekennzeichnet, dass** die Siebvorrichtung (1) ein Gestell (5) mit einer Zulauföffnung (7) für Abwasser (3) umfasst, wobei die Zulauföffnung (7) in vorgesehener Einbaulage der Siebvorrichtung (1) und bezogen auf die Fließrichtung (X) des in die Siebvorrichtung (1) einströmmenden Abwassers (3) vor dem Siebrost (14) angeordnet ist.

4. Siebvorrichtung nach einem oder mehreren der vorherigen Ansprüche, **dadurch gekennzeichnet, dass** die Siebvorrichtung (1) eine von der Zulauföffnung (7) beabstandete Stauwand (8) aufweist.

5. Siebvorrichtung nach dem vorherigen Anspruch, **dadurch gekennzeichnet, dass** die Stauwand (8) in vorgesehener Einbaulage der Siebvorrichtung (1) quer oder schräg zur Fließrichtung (X) des in die Siebvorrichtung (1) einströmmenden Abwassers (3) verläuft.

6. Siebvorrichtung nach einem oder mehreren der Ansprüche 3 bis 5, **dadurch gekennzeichnet, dass** die Stauwand (8) in vorgesehener Einbaulage der Siebvorrichtung (1) in Fließrichtung (X) nach der Zulauföffnung (7) angeordnet ist.

7. Siebvorrichtung nach einem oder mehreren der Ansprüche 3 bis 6, **dadurch gekennzeichnet, dass** sich der Siebrost (14) in vorgesehener Einbaulage der Siebvorrichtung (1) und bezogen auf die Fließrichtung (X) des in die Siebvorrichtung (1) einströmmenden Abwassers (3) zwischen der Zulauföffnung (7) des Gestells (5) und der Stauwand (8) erstreckt.

8. Siebvorrichtung nach einem oder mehreren der vorherigen Ansprüche, **dadurch gekennzeichnet, dass** der Siebrost (14) mit Blick auf die Zulauföffnung (7) im Wesentlichen eine U- oder V-Form aufweist.

9. Siebvorrichtung nach einem oder mehreren der vorherigen Ansprüche, **dadurch gekennzeichnet, dass** der Siebrost (14) eine Siebwanne (23) sowie zwei sich beidseitig an die Siebwanne (23) anschließende Siebrostabschnitte (24, 25) umfasst.

10. Siebvorrichtung nach dem vorherigen Anspruch, **dadurch gekennzeichnet, dass** sich die beiden Siebrostabschnitte (24, 25) ausgehend von der Siebwanne (23) zumindest abschnittsweise geradlinig und vorzugsweise schräg nach oben erstrecken.

11. Siebvorrichtung nach Anspruch 9 und/oder 10, **dadurch gekennzeichnet, dass** sich der erste Siebrostabschnitt (24) von einem oberen Endabschnitt (27) ausgehend nach unten bis zur Siebwanne (23) erstreckt, wobei die Siebwanne (23) im Bereich einer Kanalsohle (6) angeordnet ist, und wobei sich der zweite Siebrostabschnitt (25) von der Siebwanne (23) ausgehend nach oben erstreckt.

12. Siebvorrichtung nach einem oder mehreren der vorherigen Ansprüche, **dadurch gekennzeichnet, dass** die Antriebsmittel (9) Antriebsketten, Antriebsriemen oder Antriebsseile sind.

13. Siebvorrichtung nach einem oder mehreren der vorherigen Ansprüche, **dadurch gekennzeichnet, dass** die Antriebmittel (9) jeweils mit Hilfe wenigstens eines oberen Antriebsrads (10) und/oder eines mittleren Antriebsrades (11) und/oder einer Antriebsführung (12), insbesondere einer Kufe oder Schiene, auf der Umlaufbahn (13) geführt sind.

14. Siebvorrichtung nach einem oder mehreren der vorherigen Ansprüche, **dadurch gekennzeichnet, dass** die Antriebsmittel (9) in vorgesehener Einbaulage der Siebvorrichtung (1) in Fließrichtung (X) des in die Siebvorrichtung (1) einströmmenden Abwassers (3) hintereinander angeordnet sind.

## Claims

1. A screening device (1) for separating out and removing contaminants (2) from wastewater (3)
comprising two continuous drive means (9) which are mounted with clearance from each other, wherein the drive means (9) are guided on a circular path (13) with the aid of at least one drive wheel (10, 11) in each case,
comprising a fixedly situated sieve grate (14) which includes multiple mutually spaced grating bars (21) for separating out contaminants (2) from the wastewater (3), and
comprising multiple clearing elements (15), which are connected to the drive means (9), for removing the contaminants (2), which have been separated out by the sieve grate (14), from the sieve grate (14), **characterized in that**
the sieve grate (14) forms a fixedly situated screen surface (26) which extends, in the intended installation position of the screening device (1), essentially in the flow direction (X) of the wastewater (3) flowing into the screening device (1).

2. The screening device as claimed in the preceding claim, **characterized in that** the drive wheels (10, 11) are mounted so as to be rotatable about rotational axes (16), wherein, in the intended installation position of the screening device (1), at least a portion of the rotational axes (16) extends essentially in the flow direction (X) of the wastewater (3) flowing into the screening device (1).

3. The screening device as claimed in claim 1 or 2, **characterized in that** the screening device (1) comprises a frame (5) including an inlet opening (7) for wastewater (3), wherein, in the intended installation position of the screening device (1), the inlet opening (7) is situated in front of the sieve grate (14) relative to the flow direction (X) of the wastewater (3) flowing into the screening device (1).

4. The screening device as claimed in one or multiple of the preceding claims, **characterized in that** the screening device (1) comprises a barrier wall (8) spaced apart from the inlet opening (7).

5. The screening device as claimed in the preceding claim, **characterized in that**, in the intended installation position of the screening device (1), the barrier wall (8) extends transversely or obliquely to the flow direction (X) of the wastewater (3) flowing into the screening device (1).

6. The screening device as claimed in one or multiple of the preceding claims 3 to 5, **characterized in that**, in the intended installation position of the screening device (1), the barrier wall (8) is situated downstream from the inlet opening (7), in the flow direction (X).

7. The screening device as claimed in one or multiple of the preceding claims 3 to 6, **characterized in that**, in the intended installation position of the screening device (1), the sieve grate (14) extends between the inlet opening (7) of the frame (5) and the barrier wall (8) relative to the flow direction (X) of the wastewater (3) flowing into the screening device (1).

8. The screening device as claimed in one or multiple of the preceding claims, **characterized in that** the sieve grate (14) has an essentially U-shape or V-shape as viewed at the inlet opening (7).

9. The screening device as claimed in one or multiple of the preceding claims, **characterized in that** the sieve grate (14) comprises a screen trough (23) as well as two sieve grate sections (24, 25) adjoining the screen trough (23) on both sides.

10. The screening device as claimed in the preceding claim, **characterized in that** the two sieve grate sections (24, 25) extend in a straight line, at least in some sections, and preferably obliquely upward, proceeding from the screen trough (23).

11. The screening device as claimed in the claims 9 and/or 10, **characterized in that** the first sieve grate section (24) extends downward from an upper end section (27) to the screen trough (23), wherein the screen trough (23) is situated in the area of a channel bed (6), and wherein the second sieve grate section (25) extends upward from the screen trough (23).

12. The screening device as claimed in one or multiple of the preceding claims, **characterized in that** the drive means (9) are drive chains, drive belts, or drive cables.

13. The screening device as claimed in one or multiple of the preceding claims, **characterized in that** the drive means (9) are guided on the circular path (13) with the aid, in each case, of at least one upper drive wheel (10) and/or a central drive wheel (11) and/or a drive guide (12), in particular a runner or rail.

14. The screening device as claimed in one or multiple of the preceding claims, **characterized in that**, in the intended installation position of the screening device (1), the drive means (9) are situated one behind the other in the flow direction (X) of the wastewater (3) flowing into the screening device (1).

## Revendications

1. Dispositif de tamisage (1) pour séparer et éliminer des impuretés (2) depuis des eaux résiduaires (3),
avec deux moyens d'entraînement (9) sans fin montés à distance l'un de l'autre, les moyens d'entraînement (9) étant guidés chacun sur une trajectoire (13) par au moins une roue motrice (10, 11),
avec une grille de tamisage (14) montée à demeure qui présente plusieurs barreaux (21) de grille disposées les unes à côté des autres pour séparer les impuretés (2) depuis l'eau résiduaire (3), et
avec une pluralité d'éléments de séparation (15) en relation avec les moyens d'entraînement (9) pour éliminer de la grille de tamisage (14) les impuretés (2) séparées par la grille de tamisage (14),
**caractérisé en ce que**
la grille de tamisage (14) forme une surface de tamisage (26) fixe à demeure qui, dans la position de montage prévue du dispositif de tamisage (1), s'étend essentiellement dans la direction d'écoulement (X) des eaux résiduaires (3) s'écoulant dans le dispositif de tamisage (1).

2. Dispositif de tamisage selon la revendication précédente, **caractérisé en ce que** les roues motrices (10, 11) sont montées de manière rotative autour d'axes de rotation (16), certains au moins des axes de rotation (16) s'étendant, dans la position de montage prévue du dispositif de tamisage (1), essentiellement dans la direction d'écoulement (X) des eaux résiduaires (3) s'écoulant dans le dispositif de tamisage (1).

3. Dispositif de tamisage selon la revendication 1 ou 2, **caractérisé en ce que** le dispositif de tamisage (1) comprend un bâti (5) avec une ouverture d'entrée (7) pour les eaux usées (3), l'ouverture d'entrée (7) étant disposée en amont de la grille de tamisage (14) dans la position de montage prévue du dispositif de tamisage (1) et par rapport à la direction d'écoulement (X) des eaux résiduaires (3) s'écoulant dans le dispositif de tamisage (1).

4. Dispositif de tamisage selon l'une quelconque ou plusieurs des revendications précédentes, **caractérisé en ce que** le dispositif de tamisage (1) comprend une paroi de retenue (8) espacée de l'ouverture d'entrée (7).

5. Dispositif de tamisage selon la revendication précédente, **caractérisé en ce que** la paroi de retenue (8), dans la position de montage prévue du dispositif de tamisage (1), s'étend transversalement ou obliquement par rapport à la direction d'écoulement (X) des eaux résiduaires (3) s'écoulant dans le dispositif de tamisage (1).

6. Dispositif de tamisage selon l'une quelconque ou plusieurs des revendications 3 à 5, **caractérisé en ce que** la paroi de retenue (8), dans la position de montage prévue du dispositif de tamisage (1), est disposée en aval de l'ouverture d'entrée (7) dans la direction d'écoulement (X).

7. Dispositif de tamisage selon l'une quelconque ou plusieurs des revendications 3 à 6, **caractérisé en ce que** la grille de tamisage (14) s'étend entre l'ouverture d'entrée (7) du bâti (5) et la paroi de retenue (8) dans la position de montage prévue du dispositif de tamisage (1) et par rapport à la direction d'écoulement (X) des eaux résiduaires (3) s'écoulant dans le dispositif de tamisage (1).

8. Dispositif de tamisage selon l'une quelconque ou plusieurs des revendications précédentes, **caractérisé en ce que** la grille de tamisage (14) présente une forme essentiellement en U ou en V par rapport à l'ouverture d'entrée (7).

9. Dispositif de tamisage selon l'une quelconque ou plusieurs des revendications précédentes, **caractérisé en ce que** la grille de tamisage (14) comprend une cuve de tamisage (23) ainsi que deux sections (24, 25) de grilles de tamisage s'enchaînant des deux côtés à la cuve de tamisage (23).

10. Dispositif de tamisage selon la revendication précédente, **caractérisé en ce que** les deux sections (24, 25) de grilles de tamisage s'étendent au moins par sections en ligne droite et de préférence obliquement vers le haut à partir de la cuve de tamisage (23).

11. Dispositif de tamisage selon la revendication 9 et/ou 10, **caractérisé en ce que** la première section (24) de grille de tamisage s'étend depuis une section d'extrémité supérieure (27) vers le bas jusqu'à la cuve de tamisage (23), la cuve de tamisage (23) étant disposée dans la zone d'un fond du canal (6), et la seconde section (25) de grille de tamisage s'étendant vers le haut depuis la cuve de tamisage (23).

12. Dispositif de tamisage selon l'une quelconque ou plusieurs des revendications précédentes, **caractérisé en ce que** les moyens d'entraînement (9) sont des chaînes d'entraînement, des courroies d'entraînement ou des câbles d'entraînement.

13. Dispositif de tamisage selon l'une quelconque ou plusieurs des revendications précédentes, **caractérisé en ce que** les moyens d'entraînement (9) sont guidés chacun sur l'trajectoire (13) au moyen d'au moins une roue motrice supérieure (10) et/ou d'une roue motrice centrale (11) et/ou d'un guidage d'entraînement (12), en particulier un patin ou un rail.

14. Dispositif de tamisage selon l'une quelconque ou plusieurs des revendications précédentes, **caractérisé en ce que** les moyens d'entraînement (9), dans la position de montage prévue du dispositif de tamisage (1), sont disposés les uns derrière les autres dans la direction d'écoulement (X) des eaux résiduaires (3) s'écoulant dans le dispositif de tamisage (1).
